# EUROPEAN PATENT APPLICATION

(11) **EP 3 190 090 A1**
(43) Date of publication of application: **12.07.2017**
(21) Application number: 15835867.1
(22) Date of filing: 02.07.2015
(51) Int. Cl.: C02F 1/32, B01D 33/06, B01D 39/16, B63B 13/00

(54) **BALLAST WATER TREATMENT DEVICE, AND METHOD FOR TREATING BALLAST WATER**

(30) Priority: 28.08.2014 JP 2014174249
(71) Applicant: Sumitomo Electric Industries, Ltd., Osaka-shi, Osaka 541-0041 (JP)
(72) Inventor: KANAZAWA, Shinichi, Osaka-shi Osaka 554-0024 (JP); YAHAGI, Satoshi, Osaka-shi Osaka 554-0024 (JP); UEYAMA, Munetsugu, Osaka-shi Osaka 554-0024 (JP); TANIDA, Kazuhiro, Osaka-shi Osaka 554-0024 (JP)
(74) Representative: Boult Wade Tennant
(86) International application number: PCT/JP2015/069089
(87) International publication number: WO 2016/031388

(57) **Abstract**

A ballast water treatment device includes a filtration device and an irradiation device that irradiates, with ultraviolet rays, filtered water that has been filtered. The filtration device is a device that removes 99.999% or more of L-size organisms having a minimum part size of 50 µm or more, and 90% or more of S-size organisms having a minimum part size of 10 µm or more and less than 50 µm. The irradiation device is capable of sterilizing the filtered water at a flow rate of 250 m³/h and a power consumption of 13 kW to eliminate 90% of S-size organisms immediately after a sterilization treatment.

## Description

### Technical Field

The present invention relates to a treatment device for producing ballast water stored in ships, and a method for treating ballast water.

### Background Art

Ballast water carried in a ship is seawater carried in a ship to provide safe voyage even when the ship is empty of cargo. The effect of the transfer of foreign organisms via ballast water transported by ocean-going ships on the environment, in particular, on the ecosystem has become an international issue. In 2004, the International Maritime Organization (IMO) adopted the "International convention for the control and management of ships' ballast water and sediments (hereinafter referred to as management convention)". The management convention requires the number of organisms in ballast water discharged to be at an extremely low level. In this discharge standard, the number of organisms is specified in terms of size of plankton, for example, the number of plankton having a size of 50 µm or more (hereinafter referred to as L-size organisms) is 10 organisms/m³ or less, and the number of plankton having a size of 10 to 50 µm (hereinafter referred to as S-size organisms) is 10 organisms/ml or less. Thus, when ballast water is stored in a ballast tank, a treatment for eliminating microbes in the ballast water is required.

Various methods for removing, killing, or inactivating microbes have been developed as methods for treating ballast water. PTL 1 discloses a method for removing microbes by filtration. PTL 2 and PTL 3 disclose methods for killing microbes by ultraviolet irradiation.

### Citation List

### Patent Literature

PTL 1: Japanese Unexamined Patent Application Publication No. 2006-728
PTL 2: Japanese Unexamined Patent Application Publication No. 2006-248510
PTL 3: Japanese Patent No. 5517113
PTL 4: Japanese Patent No. 4835785

### Summary of Invention

### Technical Problem

The number of L-size organisms in seawater is, for example, in Japanese coastal waters, several thousands of organisms/m³ in cases of small numbers, and hundreds of thousands of organisms/m³ in cases of large numbers. To satisfy the above regulations, it is necessary to reliably reduce the number of L-size organisms to a level of 1/100,000. Furthermore, in particular, the amount of ballast water in medium to large ships is very large, and treatment of several hundred to several thousand tons per hour is required.

Regarding removal means using a filtration membrane, in order to remove microbes, a filtration membrane having very small pores is necessary. For example, a microfiltration membrane formed of a hollow fiber membrane is used in PTL 1. Since a filtration membrane having fine pores clogs within a short time, it is necessary to frequently perform backwashing or the like, and a treatment cannot be performed in a large amount for a long time. Regarding removal means using ultraviolet irradiation, in order to remove, in particular, L-size organisms, it is necessary to increase the intensity of ultraviolet rays, and a very large device that requires a large electric power is necessary. It is not realistic to use any of these devices on a ship, in which the installation location of the device is limited, and the amount of usable electric power is limited.

In order to solve the problems described above, the inventors of the present invention have developed a ballast water treatment device including a filtration device having a novel structure. PTL 4 describes a ballast water treatment device using a filtration membrane, the device being filed by the applicant of the present invention. This device is a filtration device in which a cylindrical filter is installed in a tubular container and a liquid that is allowed to flow from the outside to the inside of the cylindrical filter is collected as a filtrate. A liquid to be filtered is ejected from a nozzle provided on a side surface of the tubular container onto a part of a filtering surface of the filter. Consequently, filtered products deposited on the surface of the filter are washed to recover the permeation flux, and the filtered products that have been washed out are discharged from a filtration front chamber. With this structure, a stable filtration state is continuously maintained. The present invention provides a specific structure using the above device structure as a base, the specific structure being used for conducting a treatment that satisfies the standards described above.

### Solution to Problem

The inventors of the present invention have advanced the development of the device and arrived at the following structures. A ballast water treatment device includes a filtration device and an irradiation device that irradiates, with ultraviolet rays, filtered water that has been filtered. The filtration device is a device that removes 99.999% or more of L-size organisms having a minimum part size of 50 µm or more, and 90% or more of S-size organisms having a minimum part size of 10 µm or more and less than 50 µm. The irradiation device is capable of sterilizing the filtered water at a flow rate of 250 m³/h and a power consumption of 13 kW to eliminate 90% of S-size organisms immediately after a sterilization treatment. Note that symbol h represents the time (hour).

A filter base of the filtration device is preferably formed of a non-woven cloth having a weight per unit area of 230 g/m² or more and 300 g/m² or less, an air flow rate of 14 cc/cm². sec or less, and a thickness of 0.5 mm or more.

Furthermore, a method for treating ballast water includes installing the ballast water treatment device in a hull, using, as untreated water, seawater taken from the outside of the hull, further applying a sterilization treatment to filtered water treated by the ballast water treatment device, and subsequently storing the sterilized water in the hull as ballast water. Advantageous Effects of Invention

There are provided a ballast water treatment method and a ballast water treatment device that can stably treat ballast water specified in the management convention in a large amount.

### Brief Description of Drawings

[Fig. 1] Figure 1 is a block diagram that schematically illustrates a basic overall structure of a device 10 for treating ballast water for a ship.
[Fig. 2] Figure 2 is a view illustrating a water-filling operation method for filling a ballast tank with ballast water.
[Fig. 3] Figure 3 is a view illustrating a water discharge operation method for discharging ballast water from a ballast tank.
[Fig. 4] Figure 4 is a view illustrating an example of a rotary filtration device and is a sectional schematic view illustrating the structure of a vertical section including an axis line.
[Fig. 5] Figure 5 is a schematic view illustrating the structure of a horizontal A-A section in Fig. 4.
[Fig. 6] Figure 6 is a perspective schematic view that schematically illustrates a basic structure of a pleated filter.
[Fig. 7] Figure 7 is a schematic view illustrating a structural example of an irradiation device and illustrates a top view of an irradiation device.
[Fig. 8] Figure 8 is a schematic view illustrating a structural example of an irradiation device and illustrates a front view of an irradiation device.
[Fig. 9] Figure 9 is a schematic view illustrating a structural example of an irradiation device and illustrates a side view of an irradiation device.
[Fig. 10] Figure 10 is a graph that explains experimental results and is a graph in which the vertical axis represents the number of L-size organisms and the horizontal axis represents the states before and after filtration.
[Fig. 11] Figure 11 is a graph that explains experimental results and is a graph in which the vertical axis represents the survival rate of organisms and the horizontal axis represents the size of organisms.
[Fig. 12] Figure 12 is a graph showing the results of the measurement of changes in the filtration flow rate and a filtration differential pressure before and after filtration. Reference Signs List

1 filtration device
2 irradiation device
31, 32, 33, 34, 35, 36, 37, 38 pipe
4 pump
5 ballast tank
10 ballast water treatment device
61 hull
62 water intake opening
63 water discharge opening
71, 72, 73, 74, 75, 76, 77, 78, 79 valve
101 pleated filter
11 filter base
102 untreated-water nozzle
103 housing
106 untreated-water flow path
107 filtered-water flow path
108 discharge flow path
121 nozzle opening
131 outer tubular portion
132 lid portion
133 bottom portion
140 central pipe
141 water intake hole
190 motor
210 ultraviolet lamp
220 chamber portion
230 flange portion
240 pipe portion

### Description of Embodiments

### [Description of embodiments of the present invention]

Embodiments of the present invention will be listed and described.

An embodiment of the present invention is a ballast water treatment device including a filtration device and an irradiation device that irradiates, with ultraviolet rays, filtered water that has been filtered. The filtration device is a device that removes 99.999% or more of L-size organisms having a minimum part size of 50 µm or more, and 90% or more of S-size organisms having a minimum part size of 10 µm or more and less than 50 µm. The irradiation device is capable of sterilizing the filtered water at a flow rate of 250 m³/h and a power consumption of 13 kW to eliminate 90% of S-size organisms immediately after a sterilization treatment.

The device includes a filtration device and an irradiation device in combination. The filtration device removes L-size organisms so that the number of the L-size organisms is reduced to 1/100,000 or less. Most of the S-size organisms are also removed by the filtration device. Due to this performance of the filtration device, a function of eliminating L-size organisms is not required for the ultraviolet irradiation device. It is sufficient that the target eliminated by the irradiation device includes only S-size organisms and bacteria having a smaller size than the S-size organisms, all of which are left after filtration. Accordingly, the size and the power consumption of the irradiation device can be significantly reduced. In the case where a ballast water treatment device is installed in a ship, an ultraviolet irradiation device that requires a large space and a large electric power is not practically used because the installation floor area is limited and the usable electric power is also limited.

In order to suitably install the device in a medium or large ship in terms of practical use, an amount of water that can be treated by the device is preferably 100 m³/h or more, and a total power consumption of the filtration device and the irradiation device is preferably 16 kW or less during an operation in which an amount of water treated is 200 m³/h. Herein, the filtration device does not include a pump.

The irradiation device is a device including an ultraviolet irradiation lamp in a flow path of filtered water. Specifically, a medium-pressure ultraviolet lamp can be used as the ultraviolet irradiation lamp. Even in the case of a treatment at 250 m³/h, the power consumption is 13 kW or less. Preferably, the ultraviolet irradiation lamp is placed in a protective tube and is replaceable. A surface of the protective tube, the surface coming in contact with filtered water, is preferably automatically cleaned at regular intervals, for example, once an hour. Furthermore, preferably, an illuminance sensor is provided in the flow path, and the intensity of the lamp is controlled in accordance with the sensing result of the sensor so as to ensure a necessary amount of ultraviolet irradiation.

The filtration device is preferably a rotary filtration device including a pleated filter that includes a filter base having folds that repeatedly form mountains and valleys and having a tubular shape whose axial direction is a ridge line direction of the folds, the pleated filter being used as a filtration membrane, a top surface of a cylinder and a bottom surface of the cylinder of the pleated filter each being sealed in a watertight manner, the pleated filter being held rotatably about a cylindrical axis; an untreated-water nozzle through which untreated water is ejected toward an outer circumferential surface of the pleated filter; a housing that includes an outer tubular portion provided so as to surround the pleated filter and including a nozzle opening of the untreated-water nozzle therein; a filtered-water flow path through which filtered water that has passed through the pleated filter is guided from the inside of the cylinder of the pleated filter to the outside of the housing; and a discharge flow path through which discharge water that is not filtered by the pleated filter is discharged to the outside of the housing. By performing cleaning every one rotation while rotating a filtering surface, a large amount of treatment water can be continued to be filtered stably for a long time, for example, without performing backwashing while stopping the device. Herein, the filter base is preferably formed of a non-woven cloth having a weight per unit area of 230 g/m² or more and 300 g/m² or less, an air flow rate of 14 cc/cm². sec or less, and a thickness of 0.5 mm or more. By using such a filter base in the rotary filtration device, 99.999% or more of L-size organisms and 90% or more of S-size organisms can be removed. In general, with a decrease in the size of openings of a filter and an increase in the thickness of the filter, smaller suspended solids can be removed. On the other hand, with a decrease in the size of openings of a filter, the openings tend to clog and it becomes difficult to continue filtration. The above feature of the filter base is specified on the basis of the findings of appropriate ranges in a rotary filtration device.

For example, polyester, nylon, polyethylene, polypropylene, polyurethane, polytetrafluoroethylene (PTFE), or polyvinylidene fluoride (PVdF) can be used as the filter base. For the purpose of performing a high-flow rate treatment by a rotary filtration device, the filtration performance, the ease of cleaning, and the strength at break are also necessary as the performance of the filter base. For this reason, a polyester non-woven cloth is particularly suitably used, and a polyethylene terephthalate non-woven cloth is the most suitable. In particular, a non-woven cloth formed by using polyester filaments is preferable because the generation of loose threads due to abrasion or the like does not occur.

The rotary filtration device is preferably a device that is operable so that a change in a filtration differential pressure per minute and a change in an average filtration flow rate per minute are each within ±10% for 10 hours or more. The change in the filtration differential pressure per minute and the change in the average filtration flow rate per minute are each more preferably within ±8%, and still more preferably within ±5%. In ballast water treatment devices, after relatively large plankton is removed by a filtration device, a sterilization treatment is performed by using an ultraviolet irradiation device or an electrolytic device. In such a case, a change in the filtration flow rate may vary the amount of ultraviolet irradiation or the chlorine concentration in an electrolytic treatment per a certain amount of filtered water, resulting in excess or deficiency of the sterilization effect. When the filtration flow rate of filtered water supplied is constant, a necessary and sufficient intensity of an ultraviolet lamp or a necessary and sufficient amount of chlorine is enough, and thus the treatment can be efficiently performed.

The time "10 hours" is a value determined from a standard time during which a filling and discharge operation of ballast water is performed once in a ship and means that the differential pressure of the filtration device does not change while filtration is continuously performed. The range of the change is a value determined in terms of practical performance. The term "filtration differential pressure" refers to a difference between a container pressure before filtration and an outlet pressure of treated water after filtration. The container pressure is measured at a position of a container at which a jet flow of untreated water does not affect directly, for example, at the inside of a lid portion. The outlet pressure is measured, for example, near a pipe from which filtered water is taken out. In this case, a value corrected in consideration of a hydraulic head pressure due to the arrangement (height) between the measuring position of the container pressure and the measuring position of the outlet pressure is defined as the differential pressure. Each of the pressures is measured, for example, at an interval of one minute. The average filtration flow rate is a value determined by measuring a flow rate of filtered water, which has been filtered, with a flow meter at an interval of one minute. The term "change" refers to a ratio of a maximum MAX and a minimum MIN of 600 points (if there are singular points due to, for example, improper measurement, such points are excluded) to an average AVE of the 600 points when the filtration differential pressure and the average filtration flow rate are recorded from the start of the operation for 10 hours at an interval of one minute. More specifically, a larger value α out of (MAX - AVE)/AVE) x 100 and (MIN - AVE)/AVE) x 100 is defined as a change α. Furthermore, more preferably, such a 10-hour continuous operation can be continuously performed intermittently 10 times or more, that is, for 100 hours or more in total. The time "100 hours" is a value determined from a requirement for the interval of maintenance such as the replacement of a filter. During the intermittent operation, it is more preferable to perform rotary cleaning in which a rotational operation is performed while only untreated water is introduced without performing filtration. In general, with a progress of filtration, a filter clogs. Accordingly, when an operation is continued at the same differential pressure, the filtration flow rate in the filtration decreases. Conversely, it is necessary to keep increasing the differential pressure in order to perform the operation so as to maintain the same filtration flow rate. That is, the phenomenon that both the differential pressure and the filtration flow rate do not change represents a feature of the filtration device that the operation can be continued without clogging.

A flow rate of the untreated water ejected from the untreated-water nozzle is preferably 100 m³/h or more, and a ratio (filtered water flow rate/discharge flow rate) of a flow rate of the filtered water ejected from the filtered-water flow path to a discharge flow rate of the discharge water discharged from the discharge flow path is preferably 20 to 1.5. Ideally, the untreated water flow rate is equal to the filtered water flow rate. However, a feature of the device lies in that filtration and cleaning proceed at the same time, and it is necessary to discharge water at a certain flow rate, which serves as a discharge flow rate. A higher ratio of the discharge flow rate leads to a higher filtration efficiency. On the other hand, a lower ratio of the discharge flow rate leads to a higher cleaning effect. When the ratio is a value in the above range, filtration and cleaning can be balanced for various types of untreated water, and the treatment can be stably continued for a long time. The ratio is more preferably in the range of 10 to 3, and still more preferably in the range of 6 to 4.

A method for treating ballast water preferably includes installing the above ballast water treatment device in a hull, using, as untreated water, seawater taken from the outside of the hull, further applying a sterilization treatment to filtered water treated by the ballast water treatment device, and subsequently storing the sterilized water in the hull as ballast water. By using the device or using the method, a large amount of ballast water can be stably treated for a long time without causing filtration defects. Consequently, the cost of maintenance and the cost of electric power can be reduced, and the production of ballast water can be further facilitated.

### [Detailed description of embodiments of the present invention]

The structure of a ballast water treatment device according to the present invention will now be described with reference to the drawings. The scope of the present invention is not limited to these examples but is defined by the claims described below. It is intended that the scope of the present invention covers all the modifications within the meaning and range equivalent to those of the claims.

### (Ballast water treatment device)

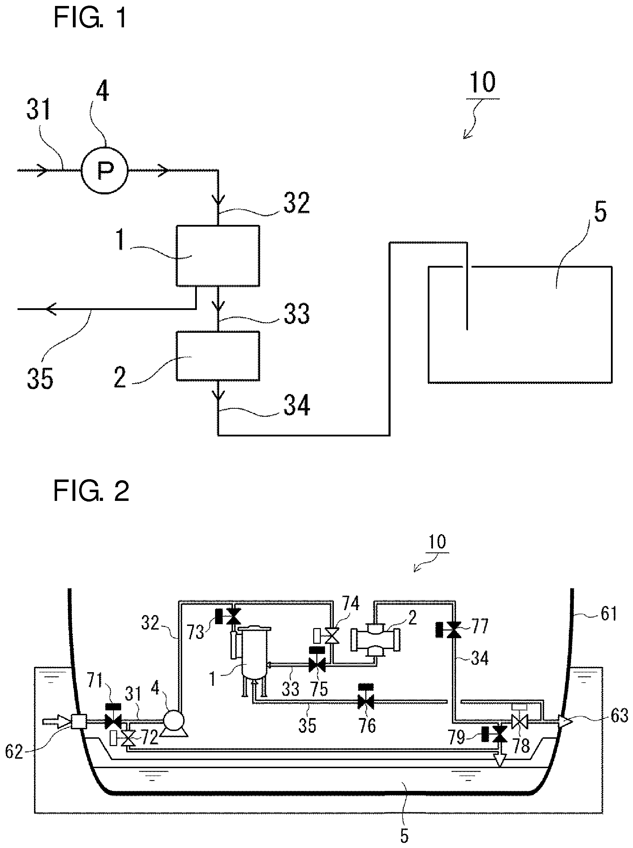

Figure 1 is a block diagram that schematically illustrates a basic overall structure of a device 10 for treating ballast water for a ship. In Fig. 1, untreated water, which is seawater or brackish water taken from the ocean or the like, is fed through a pipe 31 with a pump 4 and is supplied to a filtration device 1, which is filtration means, through a pipe 32. Filtered water that has been filtered in the filtration device 1 passes through a pipe 33 and is fed to an irradiation device 2 including an ultraviolet lamp. Discharge water that is not filtered in the filtration device 1 is guided to the outside of the device through a pipe 35. The treated water that has passed through the irradiation device 2 is fed to a ballast tank 5 through a pipe 34.

### (Method for treating ballast water)

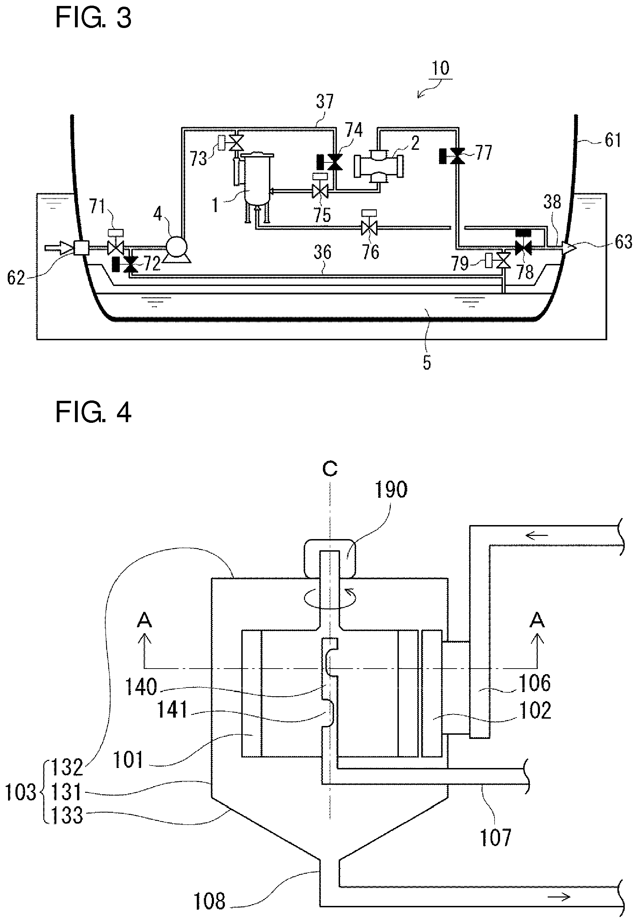

Figures 2 and 3 are views illustrating a typical method in which the ballast water treatment device 10 described above is installed in a ship and a treatment of ballast water is performed. Parts corresponding to those illustrated in Fig. 1 are assigned the same reference numerals. A ballast water treatment device 10 is installed in a hull 61 of a ship. A ballast tank 5 for carrying ballast water is provided in the hull. The ballast water treatment device 10 is a device that removes or kills organisms when seawater or the like is taken from a water intake opening 62 to fill the ballast tank 5 with the seawater or the like in a water area where the ship is anchored or when ballast water carried in the ballast tank 5 is discharged to the outside of the hull in a water area where the ship is anchored. In this embodiment, a description will be made of a method in which filtration and ultraviolet irradiation are performed during water filling and only ultraviolet irradiation is performed during discharging. However, the method of use is not limited thereto. Regarding whether filtration or ultraviolet irradiation is performed during water filling and discharging, various combinations are possible depending on the arrangement of pipes and the order of valve operations. For example, operations and cleanings of the filtration device 1 and the irradiation device 2 for maintenance need to be separately performed, but are not described herein.

Figure 2 is a view illustrating a water-filling operation method for filling a ballast tank 5 with ballast water. During a water-filling operation, valves 71, 73, 75, 76, 77, and 79 are opened (allow water to flow), and valves 72, 74, and 78 are closed (do not allow water to flow). Untreated water taken from the water intake opening 62 by the action of a pump 4 is fed to a filtration device 1 through pipes 31 and 32. Filtered water that has been filtered in the filtration device 1 is fed to an irradiation device 2 through a pipe 33. Treated water subjected to ultraviolet irradiation in the irradiation device 2 is fed to a ballast tank 5 through a pipe 34. Note that discharge water that has not passed through a filtration membrane in the filtration device 1 passes through a pipe 35 and is discharged from a water discharge opening 63 to the original water area together with removed suspended solids and organisms.

According to the device of the present invention, the number of L-size organisms is reduced to substantially zero, and most of S-size organisms are also removed by the filtration device 1. In addition, remaining S-size organisms, other bacteria, and the like are eliminated by the irradiation device 2. Accordingly, ballast water having a very low content of microbes can be stored in the ballast tank 5. In the ballast tank 5, the ballast water is stored for a long time in an environment in which the ballast water is not exposed to sunlight. In such an environment, some organisms die, and some organisms proliferate. It is known that many animal organisms are L-size organisms and have a higher risk of proliferation than vegetable organisms even in the ballast tank 5, which is a dark place. The device of the present invention can substantially perfectly remove L-size organism in the filtration device 1 and thus suppress proliferation of animal organisms in the ballast tank 5.

Figure 3 is a view illustrating a water discharge operation method for discharging ballast water carried in the ballast tank 5 to the outside of the hull. During a water discharge operation, the valves 72, 74, 77, and 78 are opened, and the valves 71, 73, 75, 76, and 79 are closed. The ballast water pumped up from the ballast tank 5 by the pump 4 is fed to the irradiation device 2 through pipes 36 and 37. Some of organisms surviving in the ballast tank 5 are eliminated by ultraviolet irradiation in the irradiation device 2, and then discharged from the water discharge opening 63 to the outside of the hull through a pipe 38.

### (Filtration device)

The filtration device is a device that removes 99.999% or more of L-size organisms having a minimum part size of 50 µm or more, and 90% or more of S-size organisms having a minimum part size of 10 µm or more and less than 50 µm. Ballast water that satisfies a desired standard can be produced by combining this filtration device with an irradiation device that is capable of sterilizing filtered water at a flow rate of 250 m³/h and a power consumption of 13 kW to eliminate 90% of S-size organisms immediately after a sterilization treatment. Preferably, the irradiation device can eliminate S-size organisms in filtered water after filtration to a level of less than 10 organisms/ml. In terms of practical use, in order to meet the requirements of treating a large amount ballast water by a limited electric power that can be used in a ship during anchoring of the ship, the amount of water treated is 100 m³/h or more, and it is desirable that the filtration device be operable without interrupting the treatment for the purpose of maintenance of cleaning or the like.

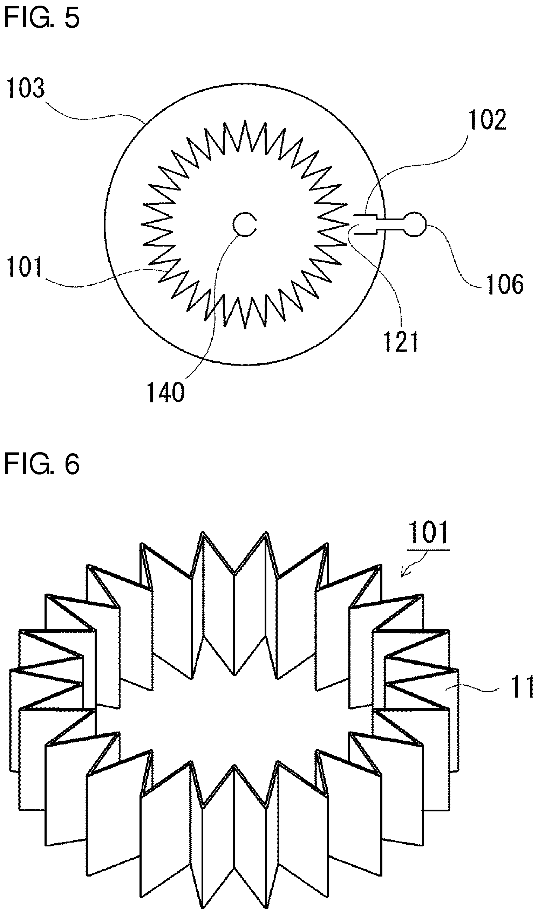

A rotary filtration device will be described as a preferable application example of such a filtration device. Figures 4 and 5 are views illustrating a filtration device suitable for a device for treating ballast water for a ship according to an embodiment of the present invention. Figure 4 is a schematic view illustrating the structure of a vertical section including an axis line. Figure 5 is a schematic view illustrating the structure of a horizontal A-A section in Fig. 4. A cylindrically shaped, pleated filter 101 is disposed about an axis line, which is the center of rotation, and is mounted to be rotatable about a central pipe 140 arranged in the center (the pipe does not rotate). An upper surface and a lower surface of the pleated filter 101 are sealed in a watertight manner. The rotatable mounting structure also needs to have a watertight structure. However, the mounting structure is not particularly limited, and a known structure may be used. A housing 103 is provided so as to cover the whole filter. The housing 103 includes an outer tubular portion 131, a lid portion 132, and a bottom portion 133. A discharge flow path 108 is provided on the bottom portion 133. An untreated-water flow path 106 and an untreated-water nozzle 102 are provided in order to introduce seawater as untreated water into the housing 103. The untreated-water nozzle 102 is provided to extend from the untreated-water flow path 106 so as to have a nozzle opening 121 thereof in the outer tubular portion 131 of the housing 103, and is configured so that the untreated water flows toward an outer circumferential surface of the pleated filter 101. A motor 190 is provided on the central axis of the pleated filter 101 for the purpose of the rotation of the pleated filter 101. The motor 190 is driven by an electric power supplied from a driving control unit (not illustrated).

In this embodiment, the untreated water ejected from the untreated-water nozzle 102 is applied to the outer circumferential surface of pleats of the pleated filter 101, and an effect of cleaning the pleated filter 101 is obtained by the pressure of the untreated water. The untreated water that is not filtered and suspended solids settled in the housing 103 are sequentially discharged through the discharge flow path 108 on the bottom of the housing 103. The nozzle opening 121 of the untreated-water nozzle 102 preferably has a rectangular opening. A large amount of water is ejected from the untreated-water nozzle 102 onto the pleated filter surface, thereby applying a force in a direction in which mountains of the pleated filter 101 are pushed and opened. The mountains open up, and a liquid flows in and out from gaps between pleats. Consequently, a flow is generated on a surface of the filter base, and an effect of cleaning the filter is obtained. This point that filtration is performed while continuously and constantly discharging suspended solids and residual untreated water in this manner is also a feature of this device. This feature is advantageous for reliably achieving a large amount of treatment of 50 to 100 m³/h and, in a larger system, 4,000 m³/h, which are required for ballast water. The filtered water that has been filtered by the pleated filter 101 is guided to a filtered-water flow path 107 through a water intake hole 141 provided in the central pipe 140 in the inside of the filter, and is discharged to the outside of the housing 103. With regard to the correspondence with Fig. 1, the pipe 32 in Fig. 1 corresponds to the untreated-water flow path 106 in Fig. 4, the pipe 33 corresponds to the filtered-water flow path 107, and the pipe 35 corresponds to the discharge flow path 108.

Figure 6 is a perspective schematic view that schematically illustrates a basic structure of a pleated filter 101. The pleated filter 101 is obtained by forming a pleated shape by folding a planar strip-like filter base 11 along parallel folds so as to have alternating mountains and valleys and further connecting to have a cylindrical shape. In order to prevent the filter from breaking, it is preferable to adopt a reinforcement in which a resin is applied to the folds of the filter or a reinforcing structure such as a reinforcing sheet provided on each of the pleats of the filter.

An example of a device that performs a treatment at a rate of 100 m³/h includes a pleated filter having an outer diameter of 700 mm, a length in the axial direction of 320 mm, a height as an effective area of 200 mm, a pleats depth of 70 mm, and a number of pleats of 420. Another example of a device that performs a treatment at a rate of 250 m³/h includes a pleated filter having an outer diameter of 810 mm, a length in the axial direction of 399 mm, a height as an effective area of 377 mm, a pleats depth of 70 mm, and a number of pleats of 517.

### (Irradiation device)

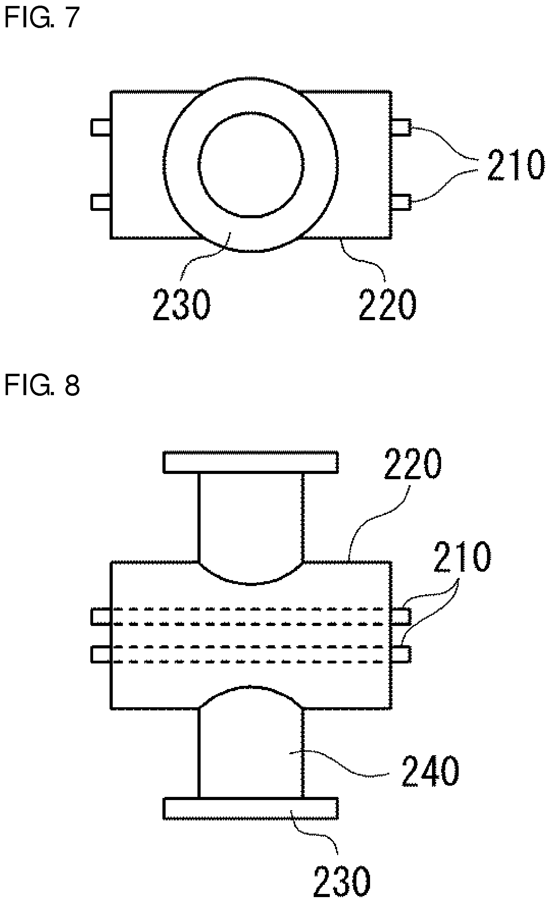

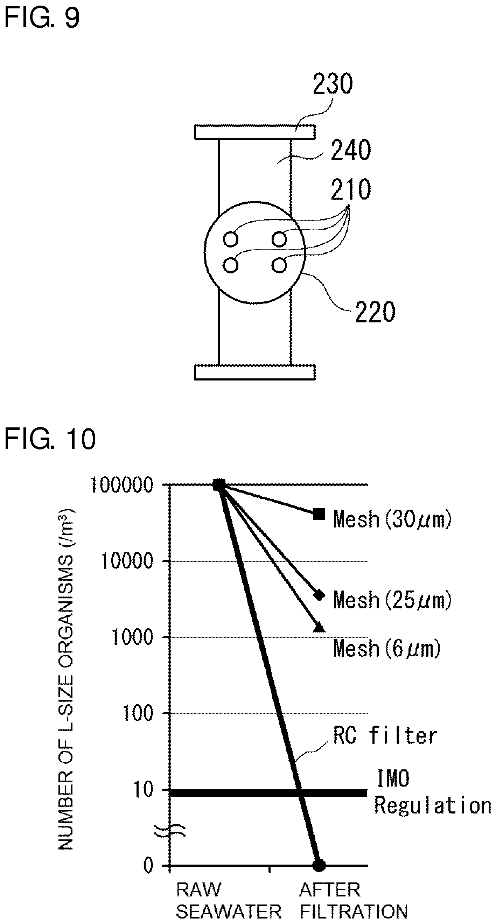

Figures 7, 8, and 9 are schematic views illustrating a structural example of an irradiation device. Figure 7 is a top view, Fig. 8 is a front view, and Fig. 9 is a side view of the irradiation device. A chamber portion 220 includes a plurality of ultraviolet lamps 210 in an inner space thereof. The chamber portion 220 has, on both ends of a tubular shape thereof, a structure that enables the ultraviolet lamps 210 to be replaced and enables electrodes to extend, though the detailed structure is not illustrated in the figure. An example of a preferred embodiment is a structure in which protective tubes that can transmit ultraviolet rays are provided in the chamber portion 220 and the ultraviolet lamps 210 are attached to the inside of the protective tubes. The irradiation device more preferably includes a cleaning mechanism so that the surfaces of the ultraviolet lamps or the protective tubes are cleaned at regular intervals. Pipe portions 240 connected to the outside are provided on and under the chamber portion 220. Ends of the pipe portions 240 are preferably provided with flange portions 230 to which pipes are to be attached. The number of the ultraviolet lamps is determined in accordance with, for example, the irradiation output of each of the lamps and the rated amount of treatment water to be treated. The ultraviolet lamps 210 are preferably evenly arranged in the chamber portion 220 so that flowing untreated water is uniformly irradiated with ultraviolet rays as much as possible. The structure of the irradiation device is illustrative, and the form of the chamber, the number of ultraviolet lamps, and the like are not limited thereto.

A feature of the ballast water treatment device of the present invention lies in that the ultraviolet irradiation device is simplified by removing L-size organisms with the filtration device so that the number of the L-size organisms is reduced to 1/100,000 or less. This feature enables the total power consumption of the filtration device and the irradiation device to be 16 kW or less during an operation at a treatment water flow rate of 200 m³/h.

### (EXPERIMENTAL EXAMPLE 1)

An experiment for confirming the filtration performance of a filtration device was conducted. Filtration using the rotary filtration device (rotational cleaning (RC) filter) and filtration using, as a typical filtration membrane, a mesh-type filter having pores were compared. The filter base used in the pleated filter of the rotary filtration device is formed of a polyethylene terephthalate non-woven cloth having a weight per unit area of 260 g/m², an air flow rate of 10 cc/cm². sec or less, and a thickness of 0.6 mm. In order to prevent breakage, a flexible polyurethane resin is applied to folds and then cured. The pleated filter has an outer diameter of 700 mm, a length in the axial direction of 320 mm, a height as an effective area of 200 mm, a pleats depth of 70 mm, and a number of pleats of 420. For comparison, mesh-type filters having an opening of 30 µm, 25 µm, or 6 µm were used.

Figure 10 shows the removal ratios of L-size organisms when the RC filter was used and when the mesh-type filters were used as comparative examples. Figure 10 is a graph in which the vertical axis represents the number of L-size organisms and the horizontal axis represents the states before and after filtration. Raw water containing L-size organisms at a concentration of 100,000 organisms/m³ was prepared as untreated water, and filtration was performed. The results show the following. With respect to the concentration of 100,000 organisms/m³ in the raw water, the number of L-size organisms in filtered water became 0 organisms/m³ after the treatment with the RC filter. On the other hand, L-size organisms remain in filtered water at a concentration of 1,000 organisms/m³ or more after the treatment with each of the mesh-type filters.

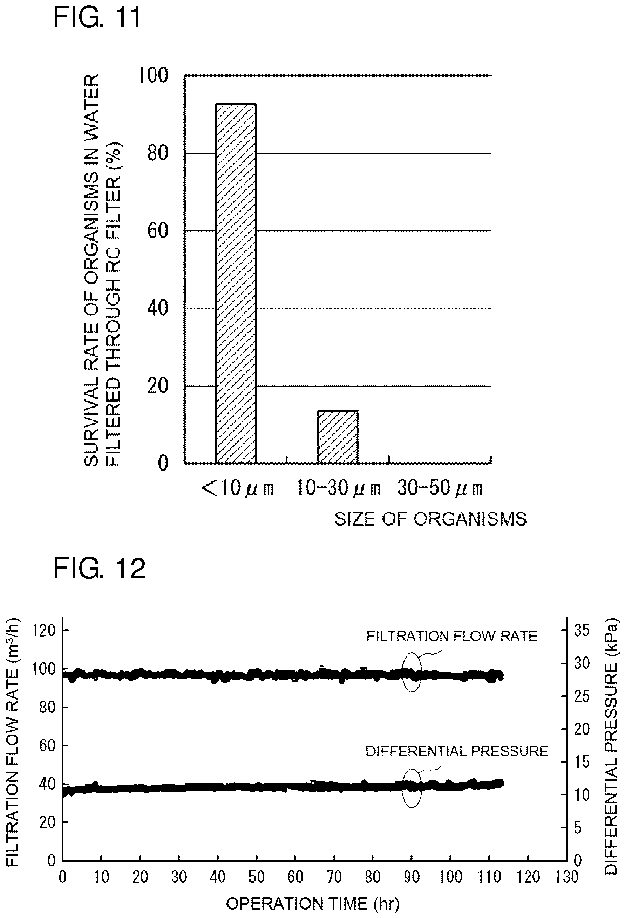

Furthermore, the performance of the RC filter with respect to S-size organisms was also similarly confirmed. Figure 11 shows the results. In Fig. 11, the vertical axis represents a survival rate of organisms and the horizontal axis represents the size of organisms. All organisms having a size of 30 µm or more, and 80% or more of organisms having a size of 10 to 30 µm could be removed. Thus, it was confirmed that the RC filter has a good organism removal performance that has not been hitherto realized.

### (EXPERIMENTAL EXAMPLE 2)

An experiment similar to the experiment described above was conducted using an RC filter including another filter base. The filter base used is formed of a polyethylene terephthalate non-woven cloth having a weight per unit area of 200 g/m², an air flow rate of 18 cc/cm². sec or less, and a thickness of 0.5 mm. With this filter base, L-size organisms could not be removed in an amount of 99.999% or more. Furthermore, an experiment was conducted using two stacked non-woven cloths each of which was the same as the above non-woven cloth except that it had a weight per unit area of 260 g/m², which was the same as that of the non-woven cloth used in Experimental Example 1. According to the result, the filtration differential pressure increased, resulting in difficulty in performing a continuous long-term operation.

### (EXPERIMENTAL EXAMPLE 3)

Experiments described below were conducted in order to confirm practical performance of a ballast water treatment device in which a filtration device and an irradiation device are combined. A procedure for a one-cycle test is as follows.
1) Preparation of raw water (treatment water and control water)
2) Water-filling operation (treatment water and control water), water quality analysis, and bioanalysis.
3) Storage for 5 days (simulation of voyage)
4) Water discharge operation (treatment water, control water), water quality analysis, and bioanalysis.
The test cycle was repeated 5 times for different salinities (seawater and brackish water), that is, the test was conducted 10 times in total. The device used in the experiments has a rated amount of treatment water of 200 m³/h. Test water was prepared by adding necessary suspended solids and organisms to raw water to be used as untreated water. About 300 m³ of the test water was prepared as each of the treatment water and control water. Note that the control water is used for determining whether or not an organism treatment is achieved with the device by allowing the control water to bypass the device to perform water filling and water discharging. A barge tank that simulates a ballast tank was prepared. The preparation of the test water, a water-filling operation, and a water discharge operation were performed. Table 1 shows test results relating to the performance of treating L-size and S-size organisms. The number of L-size organisms in the treatment water that was finally discharged is 0.8 organisms/m³ on average, and the number of S-size organisms therein is 0 organisms/ml in each of the cases. In the control water, the numbers of L-size and S-size organisms were reduced by being stored in a dark place for 5 days, but the amounts of decrease were far from the acceptable standards. The treatment with the device was confirmed to be effective.

**[Table 1]**

| Test contents | Size of organisms | 0 day (Before treatment) | | 5 day (After treatment) | |
|---|---|---|---|---|---|
| | | Test value | Regulation value | Test value | Regulation value |
| Seawater (Average of 5 times) | ≧ 50 *µ*m | 333, 967 | > 100, 000 (/m³) | 0.7 | < 10 (/m³) |
| | < 50 *µ*m | 2, 165 | > 1,000 (/ml) | 0 | < 10 (/ml) |
| | ≧ 10 *µ*m | | | | |
| Brackish water (Average of 5 times) | ≧ 50 *µ*m | 291, 850 | > 100, 000 (/m³) | 0.9 | < 10 (/m³) |
| | < 50 *µ*m | 1, 946 | > 1,000 (/ml) | 0 | < 10 (/ml) |
| | ≧ 10 *µ*m | | | | |

### (EXPERIMENTAL EXAMPLE 4)

An experiment similar to that in Experimental Example 3 was conducted in three sea areas by using a ballast water treatment device installed in a ship in a practical manner. Table 2 shows the results. In the control water at the time of water filling, the control water being used as untreated water, L-size and S-size organisms were present in the values shown in the table. At the time of the water discharge of the treated water treated by using the treatment device, the number of observed L-size organisms was 0.2 in No. 1 and 0 in all the other test cycles. In the control water for comparison, which was not allowed to pass thorough the treatment device, many organisms were contained, though a decrease in the number of organisms was observed.

**[Table 2]**

| Test cycle | Size of organisms | Control water at the time of water filling | | Treated water at the time of water discharge | | Control water at the time of water discharge | |
|---|---|---|---|---|---|---|---|
| | | Test value | Regulation value | Test value | Regulation value | Test value | Regutation value |
| No. 1 | ≧ 50 *µ*m | 293, 337 | ≧ 100 (/m³) | 0.2 | < 10 (/m³) | 140,688 | ≧ 10 (/m³) |
| | < 50 *µ*m | 142 | ≧ 100 (/ml) | 0 | < 10 (/ml) | 103 | ≧ 10 (/ml) |
| | ≧ 10 *µ*m | | | | | | |
| No. 2 | ≧ 50 *µ*m | 580, 629 | ≧ 100 (/m³) | 0 | < 10 (/m³) | 189,446 | ≧ 10 (/m³) |
| | < 50 *µ*m | 287 | ≧ 100 (/ml) | 0 | < 10 (/ml) | 95 | ≧ 10 (/ml) |
| | ≧ 10 *µ*m | | | | | | |
| No. 3 | ≧ 50 *µ*m | 33,703 | ≧ 100 (/m³) | 0 | < 10 (/m³) | 2, 582 | ≧ 10 (/m³) |
| | < 50 *µ*m | 763 | ≧ 100 (/ml) | 0 | < 10 (/ml) | 485 | ≧ 10 (/ml) |
| | ≧ 10 *µ*m | | | | | | |

### (EXPERIMENTAL EXAMPLE 5)

With regard to the operation performance of the ballast water treatment device, an experiment for confirming the possibility of long-term continuous operation was conducted. Three pleated filters each of which was the same as that used in Experimental Example 1 were stacked in the form of a cartridge and used as an integrated filter. Regarding the operation conditions, the input flow rate of untreated water was 125 m³/h, the flow rate of filtered water was 100 m³/h, the flow rate of discharge water was 25 m³/h, and the rotational speed of the filter was 50 rpm. Figure 12 is a graph showing the results of the measurement of changes in the filtration flow rate and a filtration differential pressure before and after filtration. The vertical axis represents the filtration flow rate or the filtration differential pressure. The horizontal axis represents the operation duration time. In this test, an about 10-hour continuous filtration operation was intermittently repeated to conduct a continuous operation for more than 110 hours. The change in the filtration flow rate and the change in the filtration differential pressure were each within ±8%. This data shows that, according to the device, the operation can be performed so that each of the change in the filtration differential pressure per minute and the change in the average filtration flow rate per minute was within ±10% for 10 hours or more. Furthermore, the ballast water treatment device is operable with a change within ±10% for 100 hours or more in total in the case of intermittent operation.

The following was found in the experiments described above. When the rotational speed of the filter is 30 rpm or less, damage of the filter occurs early. When the rotational speed of the filter exceeds 100 rpm, the differential pressure due to rotation exceeds 40 kPa and the load of the pump increases. It was found that the rotational speed of the filter is preferably in the range of 30 to 100 rpm, and more preferably 40 to 75 rpm. Note that the transmembrane differential pressure of the filter (filtration membranes) is smaller than the filtration differential pressure. This is because differential-pressure factors other than the presence of the membrane, for example, the pressure due to the centrifugal force of rotation, and piping resistance that is present even in the case of absence of the filter, are added to the pure transmembrane differential pressure.
In the case of this device, the transmembrane differential pressure is about 0.1 to 2 kPa relative to a filtration pressure difference of 10 kPa. When the flux of the untreated water, which functions as wash water to the filter, is 1500 m/h or less, the cleaning performance is insufficient. When the flux of the untreated water exceeds 30,000 m/h, damage of the filter occurs early. The flux of the untreated water is preferably 22,000 to 27,000 m/h, and more preferably 23,000 to 26,000 m/h. When the filtration flow rate is 3.8 m/h or more, cleaning does not catch up, which may easily result in an increase in the differential pressure due to clogging. The filtration flow rate is preferably 3.4 m/h or less. The lower limit of the filtration flow rate is not limited from this viewpoint. However, the filtration flow rate is preferably 2 m/h or more in terms of practical use.

## Claims

1. A ballast water treatment device comprising a filtration device and an irradiation device that irradiates, with ultraviolet rays, filtered water that has been filtered,
wherein the filtration device is a device that removes 99.999% or more of L-size organisms having a minimum part size of 50 µm or more, and 90% or more of S-size organisms having a minimum part size of 10 µm or more and less than 50 µm, and
the irradiation device is capable of sterilizing the filtered water at a flow rate of 250 m³/h and a power consumption of 13 kW to eliminate 90% of S-size organisms immediately after a sterilization treatment.

2. The ballast water treatment device according to Claim 1, wherein an amount of water treated is 100 m³/h or more, and a total power consumption of the filtration device and the irradiation device is 16 kW or less during an operation in which the amount of water treated is 200 m³/h.

3. The ballast water treatment device according to Claim 1 or 2,
wherein the filtration device is a rotary filtration device including
a pleated filter that includes a filter base having folds that repeatedly form mountains and valleys and having a tubular shape whose axial direction is a ridge line direction of the folds, the pleated filter being used as a filtration membrane,
a top surface of a cylinder and a bottom surface of the cylinder of the pleated filter each being sealed in a watertight manner, the pleated filter being held rotatably about a cylindrical axis;
an untreated-water nozzle through which untreated water is ejected toward an outer circumferential surface of the pleated filter;
a housing that includes an outer tubular portion provided so as to surround the pleated filter and including a nozzle opening of the untreated-water nozzle therein;
a filtered-water flow path through which filtered water that has passed through the pleated filter is guided from the inside of the cylinder of the pleated filter to the outside of the housing; and
a discharge flow path through which discharge water that is not filtered by the pleated filter is discharged to the outside of the housing, and
the filter base comprises a non-woven cloth having a weight per unit area of 230 g/m² or more and 300 g/m² or less, an air flow rate of 14 cc/cm². sec or less, and a thickness of 0.5 mm or more.

4. The ballast water treatment device according to Claim 3, wherein the filter base comprises a polyester non-woven cloth.

5. The ballast water treatment device according to Claim 3 or 4, wherein the rotary filtration device is operable so that a change in a filtration differential pressure per minute and a change in an average filtration flow rate per minute are each within ±10% for 10 hours or more.

6. The ballast water treatment device according to Claim 5, wherein a flow rate of the untreated water ejected from the untreated-water nozzle is 100 m³/h or more, and a ratio (filtered water flow rate/discharge flow rate) of a flow rate of the filtered water ejected from the filtered-water flow path to a discharge flow rate of the discharge water discharged from the discharge flow path is 20 to 1.5.

7. A method for treating ballast water, the method comprising installing the ballast water treatment device according to any one of Claims 1 to 6 in a hull; using, as untreated water, seawater taken from the outside of the hull; further applying a sterilization treatment to filtered water treated by the ballast water treatment device; and subsequently storing the sterilized water in the hull as ballast water.
